# EUROPÄISCHE PATENTSCHRIFT

(11) **EP 3 625 379 B1**
(45) Veröffentlichungstag und Bekanntmachung des Hinweises auf die Patenterteilung: **21.04.2021**
(21) Anmeldenummer: 18729572.0
(22) Anmeldetag: 09.05.2018
(51) Int. Cl.: C25B 11/03, C25B 11/04, C25B 1/34

(54) **NICKELELEKTRODE, VERFAHREN ZU DEREN HERSTELLUNG UND DEREN VERWENDUNG**
NICKEL ELECTRODE, METHOD FOR THE PRODUCTION THEREOF, AND USE THEREOF
ÉLECTRODE DE NICKEL, PROCÉDÉ POUR SA FABRICATION ET SON UTILISATION

(30) Priorität: 18.05.2017 DE 102017110863
(43) Veröffentlichungstag der Anmeldung: 25.03.2020
(73) Patentinhaber: Zentrum für Sonnenenergie- und Wasserstoff-Forschung Baden-Württemberg Gemeinnützige Stiftung, 70563 Stuttgart (DE)
(72) Erfinder: JÖRISSEN, Ludwig, 89231 Neu-Ulm (DE); ASANTE, Jerry Bamfo, 89564 Nattheim (DE); BÖSE, Olaf, 89091 Neu-Ulm (DE)
(74) Vertreter: Ter Meer Steinmeister & Partner
(86) Internationale Anmeldenummer: PCT/EP2018/062068
(87) Internationale Veröffentlichungsnummer: WO 2018/210668

(56) Entgegenhaltungen:
- EP-A1- 0 022 252
- JP-A- 2011 168 849
- US-A- 5 635 313
- US-A1- 2015 203 976

## Beschreibung

### Gebiet der Erfindung

Die Erfindung betrifft eine Nickelelektrode mit einer Nickelschicht hoher Oberfläche aus sphärischen, nanoporösen Nickelpartikeln, ein Verfahren zur Herstellung der Nickelelektrode und deren Verwendung, insbesondere als Elektrode für die Wasserelektrolyse.

### Technischer Hintergrund und Stand der Technik

Generell ist es schwierig, festanhaftende Schichten von Nickel-Partikeln auf Nickeloberflächen ohne Anwendung eines Anpressdrucks bei erhöhter Temperatur herzustellen. Die gebildeten Schichten lösen sich üblicherweise sehr leicht vom Träger wieder ab. Ein Sinterprozess würde einen hohen Anpressdruck bei erhöhter Temperatur erfordern und stellt daher einen aufwendigen und kostspieligen Vorgang dar. Gesinterte Nickelelektroden werden seit 1928 u.a. für Nickel-Cadmium Akkumulatoren genutzt und erfordern Sintertemperaturen im Bereich 800-1000 °C (AK Shukla, B Hariprakash in SECONDARY BATTERIES - NICKEL SYSTEMS, Electrodes: Nickel. Seite 407, Elsevier, 2009).

Die US 4,605,484 beschreibt eine Elektrode zur Wasserstoffentwicklung, umfassend ein elektrisch leitfähiges Substrat mit einer darauf befindlichen Beschichtung aus einer Chromkomponente und einem Oxid mindestens eines Metalls aus Nickel und Kobalt, wobei die Beschichtung durch Schmelzsprühen mittels eines aufwendigen Plasmasprühverfahrens hergestellt wird.

Die EP 0 226 291 A1 beschreibt ein Verfahren zur Verlängerung der Gebrauchsdauer einer Elektrode zur Wasserstoffentwicklung, die ein elektrisch leitfähiges Substrat und eine Beschichtung aus einem Metalloxid umfasst, wobei dem alkalischen Elektrolyten während der Wasserstoffentwicklung eine Metallkomponente aus beispielsweise Titan oder Niob zugesetzt wird. Die Metalloxidbeschichtung auf der Elektrode kann beispielsweise durch Plasma- oder Flammsprühen hergestellt werden.

Die DE 2 002 298 beschreibt ein Verfahren zur Herstellung von Elektroden für die technische Wasserelektrolyse durch Aufbringen einer porösen Nickelschicht auf eine metallische Unterlage, wobei die poröse Nickelschicht in einer wässrigen Lösung von Alkalikarbonaten oder Alkalihydrogenkarbonaten anodisch oxidiert und das gebildete Oxidationsprodukt anschließend zu feinverteiltem metallischen Nickel reduziert wird. Die poröse Nickelschicht wird durch Flammspritzen oder Lichtbogenspritzen von metallischem Nickel auf eine aufgeraute metallische Unterlage erzeugt.

Verschiedene Nickelelektroden sind kommerziell erhältlich. Beispielsweise bekannt sind Nickel-Sinterelektroden mit stäbchenförmigen Nickelpartikeln (siehe Fig. 1 aus Morioka Y., Narukawa S., Itou T., Journal of Power Sources 100 (2001): 107-116), Nickelschaum-Elektroden mit einer wabenartigen Struktur (siehe Fig. 2) oder Nickel-Faserelektroden mit zylindrischen Nickelfasern (siehe Fig. 3 aus Ohms D., Kohlhase M., Benczur-Urmossy G., Schadlich G., Journal of Power Sources 105 (2002): 127-133.).

Die vorgenannten, kommerziell erhältlichen Nickelelektroden dienen als Elektroden für Batterien und sind zur Aufnahme von Aktivmaterial optimiert.

Die US 4,300,993 beschreibt ein Verfahren zur Herstellung von Nickelelektroden mit poröser Oberfläche für die alkalische Elektrolyse, bei dem man eine Suspension von Nickelpulver oder eine Nickellegierung enthaltendem Pulver und Bindemittel auf einen Stahlblechträger aufbringt, trocknet, den Auftrag bei erhöhter Temperatur sintert, auf der gesinterten Schicht elektrolytisch eine Nickel/Zink-Legierung abscheidet und aus der Nickel/ZinkLegierung das Zink durch Tauchen in Lauge herauslöst, um Porosität in dem elektrolytisch abgeschiedenen Material zu erzeugen. Als Metallträger kann hierbei auch ein Drahtgitter aus Nickel oder Eisen eingesetzt werden.

Übliche Metall-Beschichtungsprozesse für Metallnetze zur Herstellung von Elektroden führen häufig zum unerwünschten Ausfüllen bzw. Verschließen der Netzöffnungen, insbesondere bei geringen Drahtabständen, wodurch der Gastransport stark behindert wird.. Andererseits ist es erwünscht, eine möglichst hohe Oberfläche sowie einen guten Gastransport bei Nickelelektroden zu erzielen, um die Produktivität bei der Anwendung in Hydrolyseuren zu steigern.

### Aufgabe der Erfindung

Der Erfindung liegt die Aufgabe zugrunde, unter Vermeidung der Nachteile des Standes der Technik eine Nickelelektrode vorzusehen, die eine festanhaftende Nickelschicht auf einem elektrisch leitfähigen Nickel-Träger aufweist, eine gute mechanische Stabilität besitzt und eine möglichst hohe Oberfläche aufweist. Ferner soll die Nickelelektrode vorteilhafte elektrochemische Eigenschaften aufweisen, insbesondere bei der Wasserelektrolyse eine verstärkte Sauerstoff- und Wasserstoffentwicklung und einen guten Gastransport ermöglichen.

Des Weiteren soll ein einfaches und kostengünstiges Verfahren zur Herstellung der vorgenannten Nickelelektrode vorgesehen werden.

### Zusammenfassung der Erfindung

Die vorgenannten Aufgaben werden erfindungsgemäß gelöst durch eine Nickelelektrode gemäß Anspruch 1, ein Verfahren zur Herstellung der Nickelelektrode gemäß Anspruch 10 sowie die Verwendung der Nickelelektrode gemäß dem Anspruch 1.

Bevorzugte bzw. besonders zweckmäßige Ausführungsformen des Anmeldungsgegenstandes sind in den Unteransprüchen angegeben.

Gegenstand der Erfindung ist somit eine Nickelelektrode, umfassend ein elektrisch leitfähiges Nickelnetz aus Nickeldrähten oder ein gitterförmiges, Stege umfassendes Nickel-Streckmetall und eine nur auf den Drähten des Nickelnetzes oder nur auf den Stegen des Nickel-Streckmetalls aufgebrachte Nickelschicht aus aneinander haftenden, sphärischen, nanoporösen Nickelpartikeln, erhältlich durch ein Verfahren, umfassend folgende Schritte:
a) Vorsehen von sphärischen Nickelhydroxid-Partikeln,
b) partielle Reduzierung der sphärischen Nickelhydroxid-Partikel in einer reduzierenden Atmosphäre bei Temperaturen von 270-330°C zur Erzielung partiell reduzierter, sphärischer Ni/NiO-Partikel,
c) Herstellen einer Paste aus den erhaltenen Ni/NiO-Partikeln, einem organischen und/oder anorganischen Bindemittel, einem Tensid sowie ggf. weiteren Hilfsstoffen,
d) Aufbeschichten der Paste auf das elektrisch leitfähige Nickelnetz oder Nickel-Streckmetall, und
e) Tempern des beschichteten Nickelnetzes oder Nickel-Streckmetalls in einer reduzierenden Atmosphäre bei Temperaturen von 500-800°C.

Gegenstand der Erfindung ist ebenso ein Verfahren zur Herstellung einer solchen Nickelelektrode, umfassend folgende Schritte:
a) Vorsehen von sphärischen Nickelhydroxid-Partikeln,
b) partielle Reduzierung der sphärischen Nickelhydroxid-Partikel in einer reduzierenden Atmosphäre bei Temperaturen von 270-330°C zur Erzielung partiell reduzierter, sphärischer Ni/NiO-Partikel,
c) Herstellen einer Paste aus den erhaltenen Ni/NiO-Partikeln, einem organischen und/oder anorganischen Bindemittel, einem Tensid sowie ggf. weiteren Hilfsstoffen,
d) Aufbeschichten der Paste auf das elektrisch leitfähige Nickelnetz oder Nickel-Streckmetall, und
e) Tempern des beschichteten Nickelnetzes oder Nickel-Streckmetalls in einer reduzierenden Atmosphäre bei Temperaturen von 500-800°C.

Gegenstand der Erfindung ist schließlich ebenso die Verwendung der Nickelelektrode, insbesondere als Elektrode für die Wasserelektrolyse bzw. weiterer elektrochemischer Reaktionen in einem alkalischen Medium.

### Detaillierte Beschreibung der Erfindung

Die erfindungsgemäße Nickelelektrode zeichnet sich aus durch eine Nickelschicht aus aneinander haftenden, sphärischen, nanoporösen Nickelpartikeln, die eine größere innere Oberfläche aufweisen als bisher im Handel erhältliche Nickelelektroden für Batterien, wie Schaum-, Sinter- oder Faserelektroden.

Diese oberflächlich nanostrukturierten Nickelnetze oder Nickel-Streckmetalle können zur Wasser-Elektrolyse in alkalischen Medien eingesetzt werden. Aufgrund der hohen Oberfläche können höhere Produktivitäten als in herkömmlichen Hydrolyseuren erreicht werden. Dieser Effekt kann aber auch zu einer Verringerung des Bauraums bei konstanter Produktivität der Wasserelektrolyse genutzt werden.

Die Begriffe "nanoporös" oder "nanostrukturiert" dienen hierbei zur Bezeichnung von porösen Strukturen mit Porenöffnungen, die einen Durchmesser von maximal etwa 500 nm aufweisen, beispielsweise einen Durchmesser von 100 - 500 nm.

Nickelelektroden auf Basis von Nickelnetzen oder Nickel-Streckmetallen mit einer Nickelschicht aus sphärischen, nanoporösen Nickelpartikeln sind in der industriellen Praxis bisher nicht bekannt. Überraschenderweise hat sich gezeigt, dass die erfindungsgemäßen Nickelelektroden insbesondere in vorteilhafterweise für die Wasserelektrolyse in einem alkalischen Medium eingesetzt werden können und hierbei zu einer deutlich verstärkten Gasentwicklung bei der Sauerstofferzeugung und insbesondere bei der Wasserstofferzeugung fähig sind. Dieser überraschende Effekt der Verstärkung der Gasentwicklung ist offensichtlich der hohen inneren Oberfläche der Nickelschichten zuzuschreiben. Aufgrund der hohen inneren Oberfläche ist der Übergangswiderstand der Elektrode zum umgebenden Medium sehr gering, wodurch die erreichbaren Stromdichten zum Beispiel in der Wasserhydrolyse größer sind als im Vergleich zu unbeschichteten Nickeloberflächen.

Das erfindungsgemäße Verfahren ermöglicht es durch einfache Prozessschritte, wie druckloses Beschichten bei Raumtemperatur und anschließendes Tempern der beschichteten Nickelnetze oder Nickel-Streckmetalle zu fest anhaftenden Schichten aus Nickelpartikeln auf den Nickeldrähten oder auf den Stegen der Nickel-Streckmetalle zu gelangen. Die so hergestellten Nickelelektroden weisen eine hohe mechanische Stabilität auf, wobei die Schichten aus sphärischen Nickelpartikeln auch während und nach einer mechanischen Verformung der Nickelträger haften bleiben. In Peeltests können Haltekräfte von bis zu 350 N nachgewiesen werden, welche durch Variation der Verfahrensparameter weiter erhöht werden können.

Des Weiteren hinterlassen die eingesetzten Bindemittel und Tenside keine störenden Kohlenstoffablagerungen auf der Oberfläche der Nickelschichten, da sie rückstandsfrei verdampfbar sind.

Die erfindungsgemäß eingesetzten, gitterförmigen, Stege umfassenden Nickel-Streckmetalle können auch als Nickel-Streckgitter bezeichnet werden. Sie werden üblicherweise hergestellt durch versetzte Schnitte ohne Materialverlust unter gleichzeitig streckender Verformung des Metalls. Die Maschen des aus Tafeln oder Bändern gefertigten, gitterartigen Materials sind weder geflochten noch geschweißt. Übliche Maschenformen sind hierbei Rautenmaschen, Langstegmaschen, Sechseckmaschen, Rundmaschen und Quadratmaschen.

Die erfindungsgemäß eingesetzten Nickelnetze können ebenfalls verschiedene Maschenformen aufweisen. Bei aus Runddraht hergestellten Nickelnetzen ist es auch möglich, die Nickelnetze vor dem Beschichten zu walzen.

Die Maschenweite der verwendeten 3D-Nickelstrukturen (Netze oder Streckmetalle) liegt vorzugsweise im Bereich von 100 - 3000 µm, weiter vorzugsweise im Bereich von 100 - 1000 µm.

Die erfindungsgemäß eingesetzten, sphärischen Nickelhydroxid-Partikel sind als Batteriematerial kommerziell verfügbar (zum Beispiel bei Fa. Umicore, Belgien und Fa. Tanaka, Japan) und weisen vorzugsweise eine mittlere Partikelgröße von 0,3 - 75 µm, weiter vorzugweise 3 - 30 µm, insbesondere vorzugsweise 9 - 12 µm auf. Am meisten bevorzugt sind solche mit einer mittleren Partikelgröße von etwa 10 µm.

Die partielle Reduzierung im Schritt b) des erfindungsgemäßen Verfahrens wird bei Temperaturen von 270 - 330 °C, vorzugsweise von 290 - 310 °C, durchgeführt.

Die partielle Reduzierung erfolgt geeigneterweise über einen Zeitraum von 3 bis 5 Stunden bei den vorgenannten Bedingungen.

Sowohl die partielle Reduzierung im Schritt b) als auch die Temperung im Schritt e) des erfindungsgemäßen Verfahrens erfolgt in einer reduzierenden Atmosphäre, umfassend beispielsweise 10-100 %, vorzugsweise 10-50 % Wasserstoff, und gegebenenfalls ein Inertgas, wie Stickstoff, wenn die reduzierende Atmosphäre nicht aus 100% Wasserstoff besteht.

Als organische Bindemittel zur Herstellung einer Paste oder Suspension mit den durch partielle Reduzierung erhaltenen Ni/NiO-Partikeln eignen sich insbesondere natürliche und/oder synthetische Polymere oder Derivate davon. Beispielsweise geeignet sind Alkydharze, Cellulose und deren Derivate, Epoxidharze, Polyacrylate, wie etwa Polymethylmethacrylat (PMMA) und Polyacrylsäure (PAA), Polychlortrifluorethylen (PCTFE), Polyhexafluorpropylen (PHFP), Polyimide (PI) und deren Derivate, Polyurethane (PU) und deren Derivate, Polytetrafluorethylen (PTFE), Polytrifluorethylen (PTrFE), Polyvinylalkohol (PVA), Polyvinylidendifluorid (PVDF), Silicone, Stärke und deren Derivate, StyrolButadien-Gummi (SBR) und Mischungen aus den vorgenannten Materialien. Besonders bevorzugte organische Bindemittel sind Polyvinylalkohole.

Die bei der Herstellung der Paste oder Suspension im Schritt c) eingesetzte Menge an Tensid beträgt vorzugsweise 0,1 - 20 Gew.-%, weiter vorzugsweise 2 - 10 Gew_{[OB1]}.-%, bezogen auf das Gesamtgewicht der Paste oder Suspension. Das Tensid wird geeigneterweise ausgewählt aus der Gruppe, bestehend aus nichtionischen, ionischen und amphoteren Tensiden.

Als Tenside für die Herstellung der Paste oder Suspension können insbesondere Tenside folgender Substanzklassen eingesetzt werden:
- Anionische Tenside, wie beispielsweise Alkylcarboxylate, Alkylbenzolsulfonate, sekundäre Alkylsulfonate, Fettalkoholsulfate, Alkylethersulfate, Tauride, Olefin-/Paraffinsulfonate, Sulfosuccinate, sowie Phosphor- bzw. Phosphonsäureester und deren Salze;
- Kationische Tenside, wie beispielsweise quartäre Ammoniumverbindungen aus den Substanzklassen Alkyltrimethyl-, Dialkyldimethyl-, Alkylbenzyl- und ethoxylierte Alkyl- Ammoniumchloride und -bromide;
- Nichtionische Tenside, wie beispielsweise Alkohol-Ethoxylate, Oleyl-Cetylalkohol-Ethoxylate, Nonyl/Undecanol (C9/C11)-Ethoxylate, Isodecylalkohol (C10)-Ethoxylate, Lauryl-Myristyl (C12-C14)-Ethoxylate, Isotridecyl (C13)-Ethoxylate, Nonylphenolethoxylate, Castor-Oil-Ethoxylate und weitere Alkohol-Ethoxylate;
- Amphotere Tenside, wie beispielsweise Betaine und Sultaine aus den Substanzklassen Carboxyglycinate, Iminopropionate, Iminoglycinate, Fettsäureamidopropylbetaine und Fettsäureamidopropyl-hydroxysultaine;
- Nichtionische, amphotere Tenside, wie beispielsweise Fettalkoholethoxylate-EO/PO-Addukte, Alkylpolyglukoside, Polysorbate, Fettsäurediethanolamide und Aminoxide;

Als besonders geeignet haben sich nichtionische Tenside erwiesen, die beispielsweise eine hydrophile Polyethylenoxidkette und eine aromatische Kohlenwasserstoffgruppe enthalten, welche lipophil oder hydrophob sein kann, wie Polyethylenglycol-tert-octylphenylether.

Die Zugabe von Tensiden zu der Paste oder Suspension verhindert während des darauffolgenden Aufbeschichtens der Paste auf das elektrisch leitfähige Nickelnetz oder Nickel-Streckmetall überraschenderweise das Verschließen der Öffnungen des Nickelnetzes oder des Nickel-Streckmetalls, in dem sich offensichtlich die Paste oder die Aufschlämmung entlang der Drähte des Nickelnetzes oder entlang der Stege des Nickel-Streckmetalls zusammenzieht.

Für die Suspensions- oder Pastenherstellung können gegebenenfalls weitere übliche Hilfsstoffe zugesetzt werden, wie organische oder anorganische Lösungsmittel oder Dispergierhilfsmittel.

Als anorganische Bindemittel eignen sich insbesondere Ammoniumsalze oder Hydrazinsalze in wässrigen Medien.

Das abschließende Tempern des beschichteten Nickelnetzes oder Nickel-Streckmetalls erfolgt bei Temperaturen im Bereich von 500-800°C, vorzugsweise von 600-700°C. Die abschließende Temperung erfolgt typischerweise über einen Zeitraum von 3 bis 5 Stunden. Die abschließende Temperung dient zur vollständigen Reduktion der Ni/NiO-Partikel zur Erzielung einer Nickelschicht aus fest aneinander haftenden, sphärischen, nanoporösen Nickelpartikeln. Ferner soll sichergestellt werden, dass die eingesetzten Bindemittel, Tenside und gegebenenfalls Hilfsstoffe vollständig entfernt werden bzw. rückstandsfrei verdampfen.

Die Nickelschicht der erfindungsgemäßen Nickelelektrode weist vorzugsweise eine Dicke im Bereich von 1-1.000 µm, weiter vorzugsweise 10-900 µm, und insbesondere bevorzugt 20-200 µm, auf.

Die sphärischen, nanoporösen Nickelpartikel weisen vorzugsweise eine mittlere Partikelgröße von 0,1-25 µm, weiter vorzugsweise 1-10 µm, noch weiter vorzugsweise 2-6 µm, und insbesondere bevorzugt 3-4 µm, auf.

Erfindungsgemäß ist auch eine Dotierung der Nickelschichten aus porösen Nickelpartikeln möglich. Die Dotierung der Partikel mit Fremdionen kann vor, während oder nach dem Tempern erfolgen.

Die erfindungsgemäßen Nickelelektroden finden insbesondere Verwendung als Arbeitselektrode in Batterien, Akkumulatoren, symmetrischen und asymmetrischen Doppelschichtkondensatoren, Sensoren, als Katalysatorträger, als Elektroden in elektrochemischen Synthesen oder in fotoelektrischen und fotokatalytischen Geräten, insbesondere für die Wasserelektrolyse in einem alkalischen Medium.

Einbezogen sind insbesondere Anwendungen in der Elektrolyse, wie etwa Chlor-Alkali-Elektrolyse, Katalyse, in fotovoltaischen Beschichtungen als auch bei der fotovoltaischen Wasserstofferzeugung.

Durch die oberflächliche Nanostrukturierung zeigen die erfindungsgemäß eingesetzten Nickelnetze oder Nickel-Streckmetalle eine erhöhte Oberfläche und ermöglichen so einen einfacheren Ladungs- und Stofftransfer an der Grenzfläche Nickelnetz/Elektrolyt oder Nickel-Streckmetall/Elektrolyt. Die Nanostrukturierung der Netze oder der Streckmetalle wird durch das Aufbringen nanostrukturierter Nickelpartikel nur auf den Drähten des Nickelnetzes oder nur auf den Stegen des Nickel-Streckmetalls erreicht. Wesentlich ist, dass lediglich die Drähte bzw. Stege mit einer Schicht aus Nickelpartikeln beschichtet werden, um die Öffnungen des Netzes oder des Streckmetalls freizuhalten.

### Kurze Beschreibung der Zeichnungen

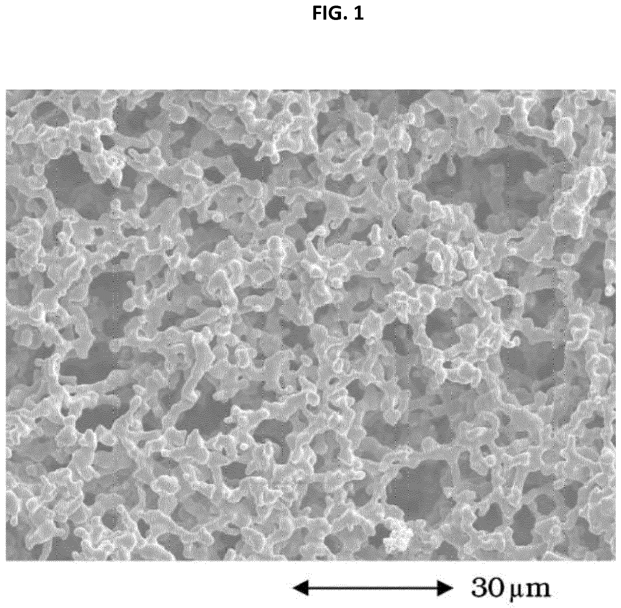

**Fig. 1** zeigt eine REM(Rasterelektronen-Mikroskopie)-Aufnahme der Oberfläche einer kommerziellen Nickel-Sinterelektrode bei 1000-facher Vergrößerung. (aus Morioka Y., Narukawa S., Itou T., Journal of Power Sources 100 (2001): 107-116);

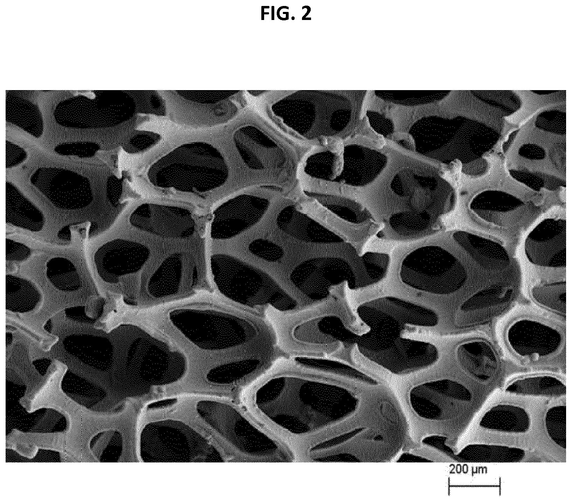

**Fig. 2** zeigt eine REM-Aufnahme der Oberfläche einer kommerziellen Nickel-Schaumelektrode mit wabenartiger Struktur bei 150-facher Vergrößerung;

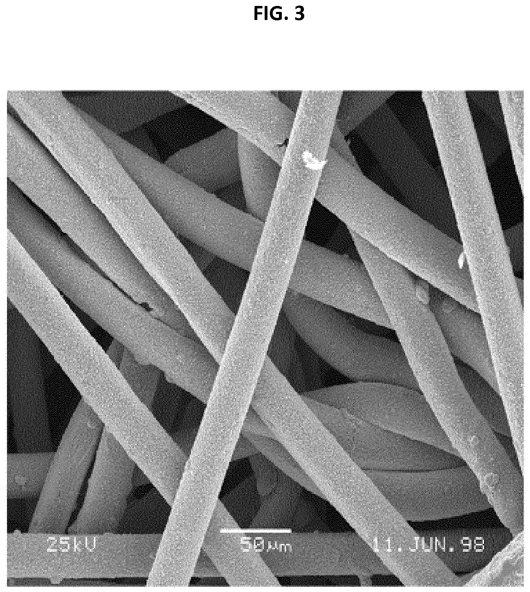

**Fig. 3** zeigt eine REM-Aufnahme der Oberfläche einer kommerziellen Nickel-Faserelektrode bei 500-facher Vergrößerung. (aus Ohms D., Kohlhase M., Benczur-Urmossy G., Schädlich G., Journal of Power Sources 105 (2002): 127-133);

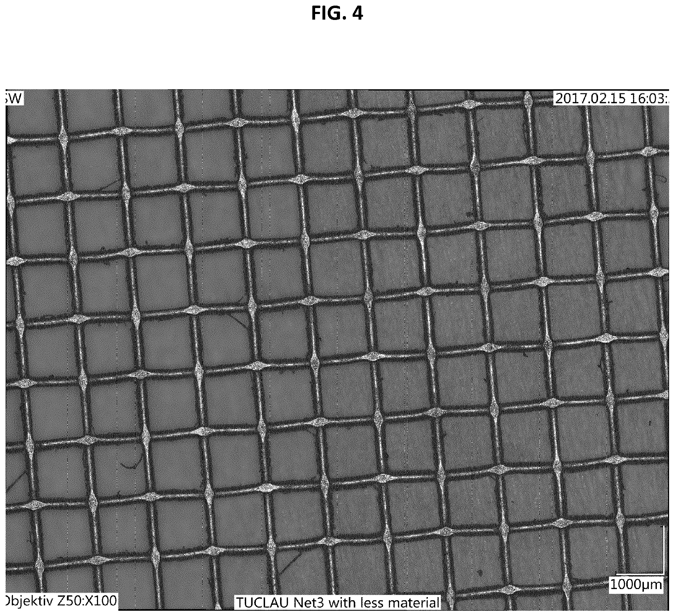

**Fig. 4** zeigt eine lichtmikroskopische Übersichts-Aufnahme der Oberfläche einer im nachfolgenden Herstellungsbeispiel beschrieben, erfindungsgemäßen Nickelelektrode in Form eines Nickelnetzes (Drahtabstand 1,2 mm, Drahtdicke 150 µm) mit einer gleichmäßigen etwa 60 µm starken Beschichtung von nanostrukturierten Nickelpartikeln (Partikelgröße 3 - 4 µm) bei 15-facher Vergrößerung;

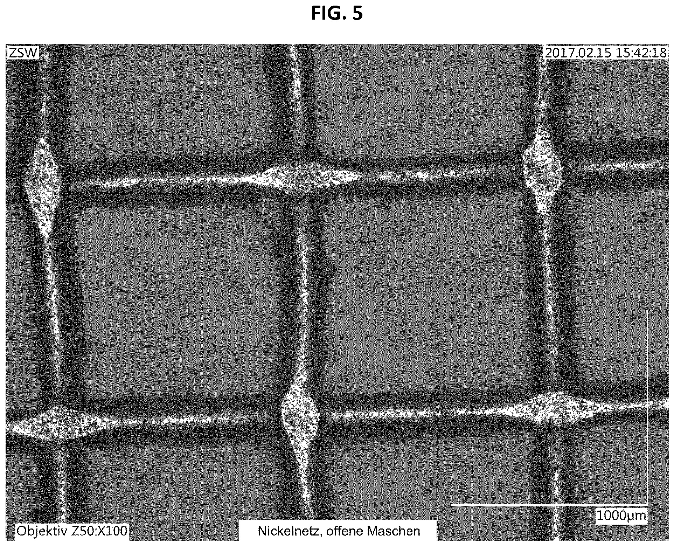

**Fig. 5** zeigt eine lichtmikroskopische Detail-Aufnahme der Oberfläche der in Figur 4 gezeigten, erfindungsgemäßen Nickelelektrode bei 55-facher Vergrößerung;

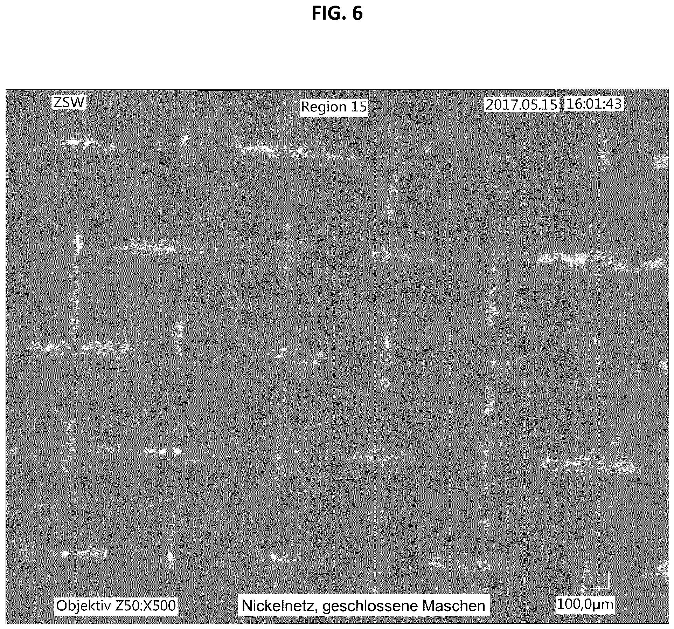

**Fig. 6** zeigt eine lichtmikroskopische Übersichts-Aufnahme der Oberfläche einer im nachfolgenden Vergleichsbeispiel beschriebenen Nickelelektrode bei 40-facher Vergrößerung.

### Bevorzugte Ausführungsformen und Ausführungsbeispiel sowie Vergleichsbeispiel

### Herstellung einer erfindungsgemäßen Nickelelektrode

50 g sphärische β-Ni(OH)₂ Partikel werden bei einer Temperatur von 300 °C für 4 Stunden in einer Atmosphäre aus 50% Wasserstoff in Stickstoff in einem Glühofen partiell reduziert, wobei der durchschnittliche Partikeldurchmesser von etwa 10 µm erhalten blieb. Diese partiell reduzierten, sphärischen Ni/NiO Partikel weisen bereits eine innere, nanoporöse Struktur auf.

10 g der partiell reduzierten, sphärischen Ni/NiO Partikel werden mit 6 ml einer wässrigen Lösung von 7,5% Polyvinylalkohol und 10% Triton X-100 (nicht-ionisches Tensid) zu einer Paste angeteigt. Diese Paste wird auf ein Nickelnetz durch Tauchen aufgetragen. Das verwendete quadratische Nickelnetz hat einen Drahtdurchmesser von 150 µm und eine Maschenweite von 1200 µm. Durch ihre verringerte Oberflächenspannung zieht sich die Paste an der Oberfläche der Nickeldrähte zusammen und gibt die Maschen des Nickelnetzes frei.

Nach einer abschließenden Temperung im Glühofen bei einer Temperatur von 620 °C in einer reduzierenden Atmosphäre aus 50 Vol. % Wasserstoff in Stickstoff ist die gebildete Elektrode einsetzbar. Die sphärischen Nickelpartikel, die auf dem Nickelnetz aufgebracht wurden, haben einen durchschnittlichen Durchmesser von 3,4 µm und weisen eine innere, nanoporöse Struktur auf.

In der nachfolgenden Tabelle 1 sind die mittleren Partikelgrößen der eingesetzten Nickelhydroxid-Partikel, der partiell reduzierten Ni/NiO-Partikel sowie der sphärischen, porösen Nickelpartikel der Nickelschicht zusammengefasst.

**Tabelle 1**

| Probe | Mittlere Partikelgröße [µm] |
|---|---|
| β-Ni(OH)₂ | 10,1 |
| Partiell reduziertes Ni/NiO | 10,3 |
| Ni-Partikel auf Ni-Netz beschichtet | 3,4 |

Eine lichtmikroskopische Übersichts-Aufnahme der Oberfläche der so hergestellten Nickelelektrode ist in Figur 4 und eine lichtmikroskopische Detail-Aufnahme der Oberfläche dieser Nickelektrode ist in Figur 5 gezeigt. Wie aus diesen Mikroskopaufnahmen hervorgeht, sind die Maschenöffnungen des Nickelnetzes frei geblieben und die Beschichtung aus nanoporösen Nickelpartikeln befindet sich lediglich auf den Drähten des Nickelnetzes.

### Herstellung einer Vergleichs-Nickelelektrode

Analog dem oben beschriebenen erfindungsgemäßen Herstellungsbeispiel wurde eine Nickelelektrode hergestellt, mit der einzigen Ausnahme, dass bei der Herstellung der Paste kein Tensid zugesetzt wurde.

Eine lichtmikroskopische Übersichts-Aufnahme der so hergestellten Elektrode ist in Figur 6 gezeigt. Daraus ist ersichtlich, dass die Maschenöffnungen des Nickelnetzes mehr oder weniger vollständig durch die Beschichtung aus Nickelpartikeln verschlossen sind, womit eine starke Behinderung des Gastransports einhergeht.

## Patentansprüche

1. Nickelelektrode, umfassend ein elektrisch leitfähiges Nickelnetz aus Nickeldrähten oder ein gitterförmiges, Stege umfassendes Nickel-Streckmetall und eine nur auf den Drähten des Nickelnetzes oder nur auf den Stegen des Nickel-Streckmetalls aufgebrachte Nickelschicht aus aneinander haftenden, sphärischen, nanoporösen Nickelpartikeln, erhältlich durch ein Verfahren, umfassend folgende Schritte:
a) Vorsehen von sphärischen Nickelhydroxid-Partikeln,
b) partielle Reduzierung der sphärischen Nickelhydroxid-Partikel in einer reduzierenden Atmosphäre bei Temperaturen von 270-330°C zur Erzielung partiell reduzierter, sphärischer Ni/NiO-Partikel,
c) Herstellen einer Paste aus den erhaltenen Ni/NiO-Partikeln, einem organischen und/oder anorganischen Bindemittel, einem Tensid sowie ggf. weiteren Hilfsstoffen,
d) Aufbeschichten der Paste auf das elektrisch leitfähige Nickelnetz oder Nickel-Streckmetall, und
e) Tempern des beschichteten Nickelnetzes oder Nickel-Streckmetalls in einer reduzierenden Atmosphäre bei Temperaturen von 500-800°C.

2. Nickelelektrode nach Anspruch 1, wobei die im Schritt a) vorgesehenen sphärischen Nickelhydroxid-Partikel eine mittlere Partikelgröße von 0,3-75 µm, vorzugsweise 3-30 µm, weiter vorzugsweise 9-12 µm, insbesondere bevorzugt etwa 10 µm, aufweisen.

3. Nickelelektrode nach Anspruch 1 und/oder 2, wobei die partielle Reduzierung im Schritt b) bei Temperaturen von 290 - 310 °C durchgeführt wird.

4. Nickelelektrode nach mindestens einem der vorangehenden Ansprüche, wobei sowohl die partielle Reduzierung im Schritt b) als auch die Temperung im Schritt e) in einer reduzierenden Atmosphäre, umfassend 10 - 100 % Wasserstoff und gegebenenfalls ein Inertgas, durchgeführt wird.

5. Nickelelektrode nach mindestens einem der vorangehenden Ansprüche, wobei im Schritt c) als organische Bindemittel natürliche und/oder synthetische Polymere oder Derivate davon, und als anorganische Bindemittel Ammoniumsalze oder Hydrazinsalze eingesetzt werden.

6. Nickelelektrode nach mindestens einem der vorangehenden Ansprüche, wobei im Schritt c) die Menge an Tensid 0,1 bis 20 Gew.-% beträgt, bezogen auf das Gesamtgewicht der Paste.

7. Nickelektrode nach mindestens einem der vorangehenden Ansprüche, wobei im Schritt c) das zur Herstellung der Paste verwendete Tensid aus der Gruppe gewählt wird, bestehend aus nichtionischen, ionischen und amphoteren Tensiden.

8. Nickelelektrode nach mindestens einem der vorangehenden Ansprüche, wobei die Nickelschicht der Nickelelektrode eine Dicke im Bereich von 1-1.000 µm, vorzugsweise 10-900 µm, weiter vorzugsweise 20-200 µm, aufweist.

9. Nickelelektrode nach mindestens einem der vorangehenden Ansprüche, wobei die sphärischen, nanoporösen Nickelpartikel eine mittlere Partikelgröße von 0,1-25 µm, vorzugsweise 1-10 µm, weiter vorzugsweise 2 - 6 µm, insbesondere bevorzugt 3-4 µm, aufweisen.

10. Verfahren zur Herstellung einer Nickelelektrode gemäß mindestens einem der Ansprüche 1 bis 9, umfassend folgende Schritte:
a) Vorsehen von sphärischen Nickelhydroxid-Partikeln,
b) partielle Reduzierung der sphärischen Nickelhydroxid-Partikel in einer reduzierenden Atmosphäre bei Temperaturen von 270-330°C zur Erzielung partiell reduzierter, sphärischer Ni/NiO-Partikel,
c) Herstellen einer Paste aus den erhaltenen Ni/NiO-Partikeln, einem organischen und/oder anorganischen Bindemittel, einem Tensid sowie ggf. weiteren Hilfsstoffen,
d) Aufbeschichten der Paste auf das elektrisch leitfähige Nickelnetz oder Nickel-Streckmetall, und
e) Tempern des beschichteten Nickelnetzes oder Nickel-Streckmetalls in einer reduzierenden Atmosphäre bei Temperaturen von 500-800°C.

11. Verwendung der Nickelelektrode nach mindestens einem der Ansprüche 1 bis 9 als Arbeitselektrode in Batterien, Akkumulatoren, symmetrischen und asymmetrischen Doppelschichtkondensatoren, Sensoren, als Katalysatorträger, als Elektroden in elektrochemischen Synthesen oder in fotoelektrischen und fotokatalytischen Geräten, insbesondere für die Wasserelektrolyse in einem alkalischen Medium.

## Claims

1. A nickel electrode comprising an electrically conductive nickel mesh of nickel wires or a lattice-like nickel expanded metal comprising webs, and a nickel layer of mutually adherent, spherical, nanoporous nickel particles, which is applied only to the wires of the nickel mesh or only to the webs of the nickel expanded metal, and which is obtainable by a method comprising the following steps:
a) providing spherical nickel hydroxide particles,
b) partially reducing the spherical nickel hydroxide particles in a reducing atmosphere at temperatures of from 270 to 330 °C in order to obtain partially reduced, spherical Ni/NiO particles,
c) producing a paste from the obtained Ni/NiO particles, an organic and/or inorganic binder, a surfactant and, optionally, additional adjuvants,
d) applying the paste as a coating to the electrically conductive nickel mesh or nickel expanded metal, and
e) annealing the coated nickel mesh or nickel expanded metal in a reducing atmosphere at temperatures of from 500 to 800 °C.

2. The nickel electrode according to claim 1, wherein the spherical nickel hydroxide particles provided in step a) have an average particle size of from 0.3 to 75 µm, preferably from 3 to 30 µm, more preferably from 9 to 12 µm, especially preferably of about 10 µm.

3. The nickel electrode according to claim 1 and/or 2, wherein the partial reduction in step b) is carried out at temperatures of from 290 to 310 °C.

4. The nickel electrode according to at least one of the preceding claims, wherein both the partial reduction in step b) and the annealing in step e) are carried out in a reducing atmosphere comprising from 10 to 100% of hydrogen and, optionally, an inert gas.

5. The nickel electrode according to at least one of the preceding claims, wherein, in step c), natural and/or synthetic polymers or derivatives thereof are used as organic binders, and ammonium salts or hydrazine salts are used as inorganic binders.

6. The nickel electrode according to at least one of the preceding claims, wherein, in step c), the quantity of surfactant is from 0.1 to 20 wt% with respect to the total weight of the paste.

7. The nickel electrode according to at least one of the preceding claims, wherein, in step c), the surfactant used to prepare the paste is selected from the group consisting of nonionic, ionic, and amphoteric surfactants.

8. The nickel electrode according to at least one of the preceding claims, wherein the nickel layer of the nickel electrode has a thickness in the range of from 1 to 1,000 µm, preferably from 10 to 900 µm, more preferably from 20 to 200 µm.

9. The nickel electrode according to at least one of the preceding claims, wherein the spherical, nanoporous nickel particles have an average particle size of from 0.1 to 25 µm, preferably from 1 to 10 µm, more preferably from 2 to 6 µm, especially preferably from 3 to 4 µm.

10. A method for manufacturing a nickel electrode according to any one of claims 1 to 9, comprising the following steps:
a) providing spherical nickel hydroxide particles,
b) partially reducing the spherical nickel hydroxide particles in a reducing atmosphere at temperatures of from 270 to 330 °C in order to obtain partially reduced, spherical Ni/NiO particles,
c) producing a paste from the Ni/NiO particles obtained, an organic and/or inorganic binder, a surfactant and, optionally, additional adjuvants,
d) applying the paste as a coating to the electrically conductive nickel mesh or nickel expanded metal, and
e) annealing the coated nickel mesh or nickel expanded metal in a reducing atmosphere at temperatures of from 500 to 800 °C.

11. A use of the nickel electrodes according to at least one of claims 1 to 9 as working electrode in batteries, rechargeable batteries, symmetrical and asymmetric double-layer capacitors, sensors, as catalyst supports, as electrodes in electrochemical syntheses, or in photoelectric and photocatalytic devices, particularly for water electrolysis in an alkaline medium.

## Revendications

1. Électrode de nickel, comportant un treillis en nickel électriquement conducteur constitué de fils de nickel, ou un métal étiré à base de nickel en forme de grille, comportant des nervures, et une couche de nickel appliquée uniquement sur les fils du treillis en nickel ou uniquement sur les nervures du métal étiré à base de nickel, constituée de particules de nickel nanoporeuses, sphériques et adhérant les unes aux autres, pouvant être obtenue par un procédé comportant les étapes suivantes consistant à :
a) fournir des particules sphériques d'hydroxyde de nickel,
b) réduire partiellement les particules sphériques d'hydroxyde de nickel sous une atmosphère réductrice à des températures de 270 à 330 °C pour obtenir des particules de Ni/NiO sphériques, partiellement réduites,
c) préparer une pâte à partir des particules de Ni/NiO obtenues, d'un liant organique et/ou inorganique, d'un tensioactif ainsi que d'autres adjuvants le cas échéant,
d) appliquer la pâte sur le treillis en nickel électriquement conducteur ou sur le métal étiré à base de nickel, et
e) mettre à l'équilibre le treillis en nickel ou le métal étiré à base de nickel revêtu, sous une atmosphère réductrice à des températures de 500 à 800 °C.

2. Électrode de nickel selon la revendication 1, dans laquelle les particules sphériques d'hydroxyde de nickel fournies à l'étape a) ont une taille de particule moyenne de 0,3 à 75 µm, de manière préférée de 3 à 30 µm, de manière plus préférée de 9 à 12 µm, de manière particulièrement préférée d'environ 10 µm.

3. Électrode de nickel selon la revendication 1 et/ou 2, dans laquelle la réduction partielle de l'étape b) est réalisée à des températures de 290 à 310 °C.

4. Électrode de nickel selon au moins une des revendications précédentes, dans laquelle aussi bien la réduction partielle de l'étape b) que la mise à l'équilibre de l'étape e) sont réalisées sous une atmosphère réductrice, comportant 10 à 100 % d'hydrogène et un gaz inerte, le cas échéant.

5. Électrode de nickel selon au moins une des revendications précédentes, dans laquelle, à l'étape c), des polymères naturels et/ou synthétiques ou des dérivés de ceux-ci sont utilisés comme liants organiques, et des sels d'ammonium ou des sels d'hydrazine sont utilisés comme liants inorganiques.

6. Électrode de nickel selon au moins une des revendications précédentes, dans laquelle à l'étape c), la quantité de tensioactif est de 0,1 à 20 % en poids, par rapport au poids total de la pâte.

7. Électrode de nickel selon au moins une des revendications précédentes, dans laquelle, à l'étape c), le tensioactif utilisé pour la préparation de la pâte est choisi parmi le groupe constitué de tensioactifs non ioniques, ioniques et amphotères.

8. Électrode de nickel selon au moins une des revendications précédentes, dans laquelle la couche de nickel de l'électrode de nickel a une épaisseur dans la plage de 1 à 1 000 µm, de manière préférée de 10 à 900 µm, de manière plus préférée de 20 à 200 µm.

9. Électrode de nickel selon au moins une des revendications précédentes, dans laquelle les particules de nickel sphériques et nanoporeuses ont une taille de particule moyenne de 0,1 à 25 µm, de manière préférée de 1 à 10 µm, de manière plus préférée de 2 à 6 µm, de manière particulièrement préférée de 3 à 4 µm.

10. Procédé pour fabriquer une électrode de nickel selon au moins une des revendications 1 à 9, comportant les étapes suivantes consistant à :
a) fournir des particules sphériques d'hydroxyde de nickel,
b) réduire partiellement les particules sphériques d'hydroxyde de nickel sous une atmosphère réductrice à des températures de 270 à 330 °C pour obtenir des particules de Ni/NiO sphériques, partiellement réduites,
c) préparer une pâte à partir des particules de Ni/NiO obtenues, d'un liant organique et/ou inorganique, d'un tensioactif ainsi que d'autres adjuvants le cas échéant,
d) appliquer la pâte sur le treillis en nickel électriquement conducteur ou sur le métal étiré à base de nickel, et
e) mettre à l'équilibre le treillis en nickel ou le métal étiré à base de nickel revêtu, sous une atmosphère réductrice à des températures de 500 à 800 °C.

11. Utilisation de l'électrode de nickel selon au moins une des revendications 1 à 9 en tant qu'électrode de travail dans des batteries, des accumulateurs, des condensateurs à double couche symétriques et asymétriques, des capteurs, en tant que support de catalyseur, en tant qu'électrodes dans des synthèses électrochimiques ou dans des appareils photoélectriques et photocatalytiques, en particulier pour l'électrolyse de l'eau en milieu alcalin.
